# EUROPÄISCHE PATENTSCHRIFT

(11) **EP 1 333 304 B1**
(45) Veröffentlichungstag und Bekanntmachung des Hinweises auf die Patenterteilung: **16.03.2005**
(21) Anmeldenummer: 03100111.8
(22) Anmeldetag: 21.01.2003
(51) Int. Cl.: G02B 7/28, G02B 21/24

(54) **Autofokusmodul mit Zusatzlichtquellen für mikroskopbasierte Systeme und Zweistrahl-Fokusdetektionsverfahren unter Benutzung des Moduls**
Microscope autofocussing module with auxiliary ligth sources and two beam focus detection method using that module
Modul de mise au point automatique comprennant des sources de lumière auxiliaires pour des systèmes à microscope et méthode de mise au point automatique à deux faiseaux utilisant ce module

(30) Priorität: 02.02.2002 DE 10204367
(43) Veröffentlichungstag der Anmeldung: 06.08.2003
(73) Patentinhaber: Leica Microsystems Semiconductor GmbH, 35578 Wetzlar (DE)
(72) Erfinder: CEMIC, Franz Dr., 35789, Weilmünster (DE); DANNER, Lambert, 35584 Wetzlar-Naunheim (DE); MAINBERGER, Robert, 35619 Braunfels (DE); VEITH, Michael Dr., 35578 Wetzlar (DE); OSTERFELD, Martin Dr, 72667, Schlaitdorf (DE); GRAF, Uwe, 35606 Solms (DE)
(74) Vertreter: Reichert, Werner F., Dr.

(56) Entgegenhaltungen:
- EP-A- 0 953 859
- DE-A- 3 328 821
- DE-A- 3 446 727
- US-A- 4 734 570
- US-A- 5 530 237
- PATENT ABSTRACTS OF JAPAN vol. 017, no. 338 (P-1564), 25. Juni 1993 (1993-06-25) -& JP 05 045573 A (OLYMPUS OPTICAL CO LTD), 23. Februar 1993 (1993-02-23)
- PATENT ABSTRACTS OF JAPAN vol. 2000, no. 26, 1. Juli 2002 (2002-07-01) -& JP 2001 242375 A (NIKON CORP), 7. September 2001 (2001-09-07)

## Beschreibung

Die Erfindung betrifft ein Autofokusmodul für ein mikroskopbasiertes System mit einem Objektiv, das eine optische Achse definiert, in der sich ein Beleuchtungslichtstrahl ausbreitet, der auf einer Oberfläche eines Objekts, auf das fokussiert wird, senkrecht steht.

Hinzu kommt, dass die Erfindung ein Autofokusverfahren für ein mikroskopbasiertes System betrifft, das mindestens ein Objektiv umfasst, das eine optische Achse des mikroskopbasierten Systems festlegt.

Die Patentschrift DE 32 19 503 offenbart eine Vorrichtung zum selbsttätigen Fokussieren auf in optischen Geräten zu betrachtende Objekte. Nach der Reflexion an der Oberfläche eines Objekts passiert das reflektierte Messlichtstrahlenbündel nach Reflexion an einem Teilerspiegel eine Blende. Mittels einer vollverspiegelten Fläche wird ein Teil des Messlichtstrahlenbündels ausgespiegelt und wird nach Durchtritt durch eine Spaltblende auf eine Differenzdiode geleitet. Im fokussierten Zustand befindet sich der Fokus zwischen den beiden Dioden. Bei Defokussierung wandert der Messspot auf einen der beiden Dioden, die mit entsprechenden Steuermitteln verbunden sind. Durch die Steuermittel werden optische oder mechanische Mittel des Mikroskops verstellt, um dem Messspot wieder zwischen die beiden Dioden zu verbringen und somit die Fokuslage wieder herzustellen.

Die Europäische Patentanmeldung EP-A-0 124 241 offenbart ein Mikroskop mit einer automatischen Fokuseinrichtung. Das Mikroskop umfasst eine Speichereinrichtung zum sicheren der Daten von den Objektiven, die im Mikroskop Verwendung finden. Ebenso ist eine Kontrolleinrichtung vorgesehen, die die verschiedenen Mikroskopfunktionen überwacht und regelt. Zu den Aufgaben der Kontrolleinrichtung zählt ebenfalls die Bewegung des Fokussiertisches. Ein CCD-Element ist als Bildaufnahmeeinrichtung vorgesehen, das ein von dem jeweils ausgewählten Objektiv ein Bild empfängt und zusammen mit einer Recheneinheit aus dem optimalen Kontrast die Bildschärfe ermittelt. Bei der Ermittlung des optimalen Schärfegrades müssen die Objektivdaten des aktuell verwendeten Objektivs berücksichtigt werden. Diese Daten sind wie bereits oben erwähnt in einem Speicher abgelegt.

Ferner offenbart die deutsche Offenlegungsschrift DE 41 33 788 ein Verfahren zur Autofokussierung von Mikroskopen und ein Autofokussystem für Mikroskope. Das Bild eines Objekts oder einer auf das Objekt eingespiegelten Struktur wird zwei Bereichen auf einem Detektor oder zwei verschiedenen Detektoren zugeleitet, wobei in Fokusstellung ein Bild vor einem Detektor und ein Bild hinter dem anderen Detektor entsteht. Die Bildschärfen auf den Detektoren werden in elektronische Signale umgewandelt, deren Differenz zur Scharfstellung des Objektivs verwendet wird. Die Abstände des Bildes oder der jeweiligen Struktur zu den jeweiligen Detektoren sind einstellbar. Gezielte Offset-Einstellungen sowie "IR-Offset"-Korrektureinstellungen sind realisierbar.

Die deutsche Offenlegungsschrift DE 33 28 8821 A1 offenbart einen Autofokus für Mikroskope. Es sind zwei alternierend geschaltete Lichiquellen vorgesehen, die jeweils Ihren vollen Lichtstrahl auf die Probe senden. In der konjugierten Ebene ist ein optisches Element vorgesehen, das das von der Oberfläche des Objekts zurückkommende Licht auf einen ersten und einen zweiten Detektor lenkt. Dieses System erfordert eine hohen Justieraufwand.

Die U.S. Patentschrift US 4.734.570 offenbart einen aktiven Autofokus, bei dem alternieren zwei IR-Lichtstrahlen erzeugt werden. Die Lichtstrahlen werden jedoch als ganzes auf die Oberfläche des Objekts abgebildet.

Die Druckschrift JP(A) 05045573 offenbart ein System zur Bestimmung der Fokuslage. Dabei wird Licht von zwei Messlichtquellen in den Strahlengang eines optischen System gelenkt. Die Messstrahlen verlaufen dabei als Randstrahlen durch die Optik des optischen Systems.

Problematisch bei der automatischen Fokuseinstellung bei Mikroskopen in der Halbleiterindustrie ist, dass Übergänge von stark reflektierenden Bereichen zu weniger reflektierenden Bereichen ein Autofokussystem zu Fehleinsteltungen führen. Diese Übergänge werden als Kanten bezeichnet. Der Einfluss dieser Kanten auf die Scharfstellung durch einen Autofokus wird in der folgenden Beschreibung als "Kanteneffekt" bezeichnet.

Die Aufgabe der vorliegenden Erfindung besteht entsprechend darin, ein Autofokusmodul für ein mikroskopbasiertes System zu schaffen, das unabhängig von den Kanteneffekten auf einem zu untersuchenden Objekt eine zuverlässige Scharfstellung gewährleistet.

Die Aufgabe wird dadurch gelöst, durch die Merkmale des Anspruchs 1.

Ebenso ist es Aufgabe der Erfindung ein Autofokusverfahren für ein mikroskopbasiertes System zu schaffen, das schnell und zuverlässig und unabhängig von Kanteneffekten die optimale Fokuslage ermittelt.

Die Aufgabe wird gelöst durch ein Autofokusverfahren, das die Schritte des Anspruchs 9 umfasst.

Die Verwendung von mindestens zwei Lichtquellen, von denen jede einen Lichtstrahl zum Fokussieren aussendet ist von besonderem Vorteil da durch die Verwendung von zwei Lichtstrahlen die Symmetrie des Systems wieder hergestellt wird, die durch die Benutzung von jeweils nur einem Bruchteil des Lichts zum Fokussieren verlorengegangen ist. Die zwei Lichtquellen emittieren je einen Lichtstrahl zum Fokussieren, wobei diese zwei Lichtquellen abwechselnd voneinander betrieben werden. In der Regel ist das abwechselnde Betreiben der beiden Lichtquellen z.B. durch deren Pulsdauer bestimmt. Somit erreicht man, dass beim Verfahren des Tisches mit dem Objekt entlang der optischen Achse, eine Bewegung des Fokus auf der Oberfläche des Objekts in zwei zueinander entgegengesetzten Richtungen erfolgt. Dies hat zur Folge, dass man annähernd gleichzeitig die Information von zwei Foki erhält. Während des Verfahrens des Objekts werden abwechselnd Intensitäten an dem ersten und an dem zweiten Detektor ermittelt und die so ermittelten Intensitäten als Intensitätsprofile in einem Speicher eines Steuerrechners abgelegt bzw. mit Musterprofilen aus dem Speicher für die optimale Fokuslage verglichen.

Das optische Mittel ist als ein Prisma ausgebildet und derart angeordnet, dass das Licht der ersten Lichtquelle in eine erste Hälfte des Beleuchtungslichtstrahls und das Licht der zweiten Lichtquelle in eine zweite Hälfte des Beleuchtungslichtstrahls gerichtet ist. Das optische Mittel kann aus jeweils zwei verspiegelten Elementen aufgebaut sein, die zueinander unter einem rechten Winkel angeordnet sind. Die verspiegelten Elemente sind zu den jeweils auftreffenden Lichtstrahlen zum Fokussieren unter einem Winkel von 45° geneigt.

Es ist von besonderem Vorteil, wenn die erste und die zweite Lichtquelle, der erste und der zweite Detektor, das optische Mittel und weitere Strahllenkmittel in einem Gehäuse angeordnet sind, das mit dem mikroskopbasierten System verbindbar ist. Da es für die Messgenauigkeit von besonderer Bedeutung ist, dass die erste und die zweite Hälfte des Lichtstrahls zum Fokussieren genau jeweils zur Hälfte in den Beleuchtungslichtstrahl des mikroskopbasierten Systems eingekoppelt werden, ist die Anordnung der verschiedenen optischen Komponenten in einem Gehäuse von Bedeutung, um eine eventuelle Verstellung der Ausrichtung zu vermeiden. Als Lichtquellen werden Laserdioden verwendet, die den Lichtstrahl zum Fokussieren erzeugen. Ferner können die Laserdioden auf einfache Weise im Pulsbetrieb betreiben werden.

Das Gehäuse des Autofokusmoduls ist mit dem mikroskopbasierten System über einen Flansch verbindbar. Im mikroskopbasierten System ist ein dichroitischer Strahlteiler vorgesehen, der den jeweiligen Lichtstrahl zum Fokussieren in das mikroskopbasierte System einkoppelt und den von der Oberfläche des Objekts reflektierten Lichtstrahl in das Autofokusmodul zurückkoppelt.

Weitere Vorteile und vorteilhafte Ausführungsformen sind Gegenstand der nachfolgenden Figurenbeschreibung, bei deren Darstellung zugunsten der Übersichtlichkeit auf eine maßstabsgetreue Wiedergabe verzichtet wurde. Es zeigen im Einzelnen:
- Fig. 1a:: eine Darstellung des Autofokussystems, des Standes der Technik, bei dem sich das Objekt unterhalb des Fokus befindet;
- Fig. 1b: eine Detailansicht des in Fig. 1a gestrichelt gekennzeichneten Bereichs, um die Bewegung des Lichtflecks auf dem Objekt zu verdeutlichen;
- Fig. 2a: ein Beispiel der Beleuchtung eines mikroskopischen Präparats mit dem System aus Fig. 1, wobei auf dem Präparat keine Bereiche unterschiedlicher Reflektivität vorgesehen sind;
- Fig. 2b: die Bestimmung des Fokus an Hand der Intensität des vom Objekt reflektierten Lichts und der Wanderung des Schwerpunkts der Intensitäten;
- Fig. 3a:: ein Beispiel der Beleuchtung eines mikroskopischen Präparats mit dem System aus Fig. 1, wobei die Laufrichtung des Fokusflecks senkrecht zu einer Kante auf dem Präparat ist;
- Fig. 3b: die Bestimmung des Fokus an Hand der Intensität des vom Objekt reflektierten Lichts und der Wanderung des Schwerpunkts der Intensitäten;
- Fig. 4a: ein Beispiel der Beleuchtung eines mikroskopischen Präparats mit dem System aus Fig. 1, wobei die Laufrichtung des Fokusflecks parallel zu einer Kante auf dem Präparat ist;
- Fig. 4b: die Bestimmung des Fokus an Hand der Intensität des vom Objekt reflektierten Lichts und der Wanderung des Schwerpunkts der Intensitäten;
- Fig. 5:: einen schematischen Aufbau des erfindungsgemäßen Autofokussystems mit wechselnder Pupillenteilung, wobei der Strahlverlauf des durch den ersten Lasers ausgesendeten Fokussierlichtstrahl dargestellt ist;
- Fig. 6:: einen schematischen Aufbau des erfindungsgemäßen Autofokussystems mit wechselnder Pupillenteilung, wobei der Strahlverlauf des durch den zweiten Lasers ausgesendeten Fokussierlichtstrahl dargestellt ist;
- Fig. 7:: ein Autofokusmodul mit dem erfinderischen Autofokussystem, das an ein mikroskopbasiertes System angesetzt werden kann;
- Fig.8a: die Form und die Bewegung des Fokusflecks auf der Oberfläche des Objekts und die Auswertung hierzu durch zwei PSDs;
- Fig.8b: die Form und die Bewegung des Fokusflecks nahe der optimalen Fokuslage auf der Oberfläche des Objekts und die Auswertung hierzu durch zwei PSDs; und
- Fig.8c: die Form und die Bewegung des Fokusflecks in der optimalen Fokuslage auf der Oberfläche des Objekts und die Auswertung hierzu durch zwei PSDs.

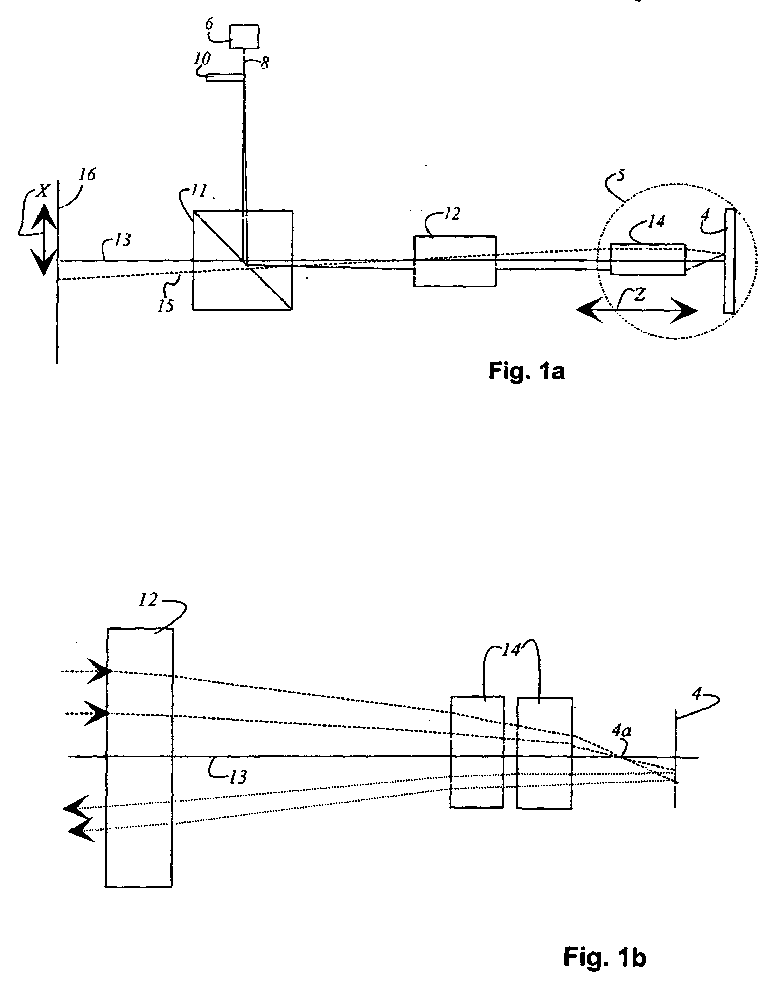

Eine Darstellung eines Autofokussystems des Standes der Technik ist in der nachfolgenden Fig. 1a dargestellt, dabei sind die Teile des Mikroskopsystems weggelassen, die nicht für die Verdeutlichung der Funktionsweise und der Zusammensetzung des Autofokussystems notwendig sind. In Fig. 1a ist die Fokuslage beschrieben, bei der sich ein Objekt 4 unterhalb des Fokus 4a befindet. Der Bereich um das Objekt 4 ist in Fig. 1a mit einem gestrichelten Kreis 5 gekennzeichnet und dieser Bereich ist in Fig. 1b im Detail dargestellt, dabei sind in Fig. 1a und 1b gleiche Bezugszeichen für gleiche Merkmale verwendet. Von einer Lichtquelle 6 wird ein Lichtstrahl 8 ausgesendet, der durch eine Pupillenteilung 10 geteilt wird. Die Lichtquelle 6 kann als Laser ausgebildet sein. Der Lichtstrahl 8 trifft auf einen Strahlteiler 11 und wird dadurch in den von einer Tubuslinse 12 und einem Objektiv 14 definierten optischen Achse 13 eingekoppelt. Ein reflektierter Lichtstrahl 15 (bzw. Lichtstrahlenbündel) tritt vom Objekt 4 ausgehend, das sich unterhalb des Fokus 4a befindet, unabgelenkt durch den Strahlteiler 11. In einer Zwischenbildebene 16 kann die Abweichung des reflektierten Lichtstrahls 15 von der optischen Achse 13 bestimmt werden. Das Objekt 4 liegt auf einem Tisch (nicht dargestellt), der durch Verstellung in Z-Richtung, Z, in eine andere Fokuslage verbracht werden kann. Diese Veränderung der Fokusposition wird in eine Änderung der X-Position, X, des reflektierten Lichtstrahls 15 in der Zwischenbildebene 16 umgesetzt.

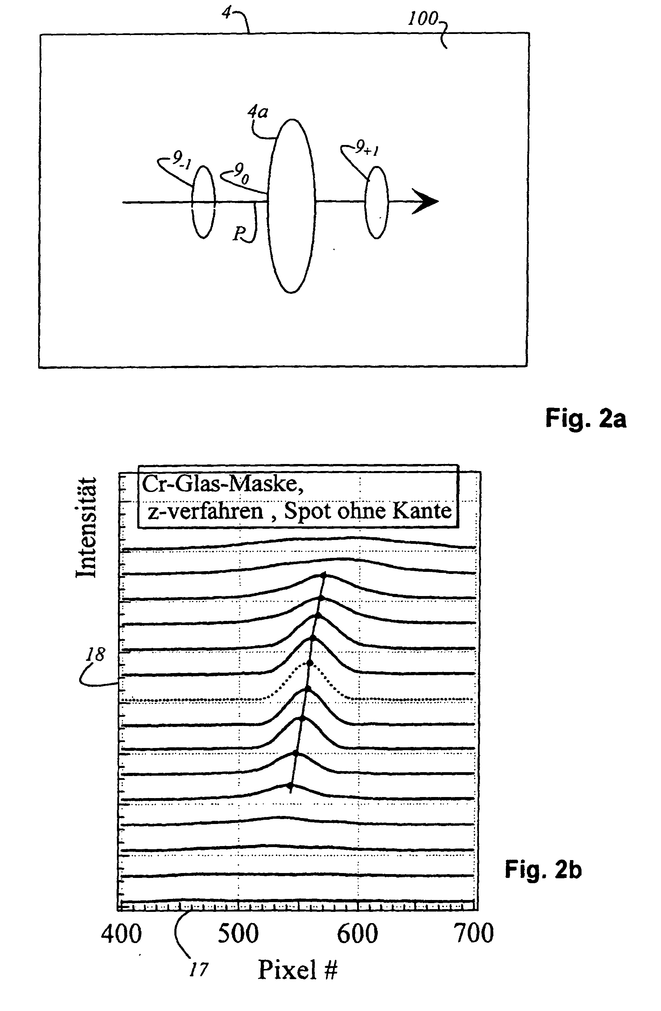

Fig. 2a zeigt die Form eines Fokusflecks 4a auf dem Objekt 4. Die Laufrichtung des Fokusflecks 4a ist auf dem Objekt 4 durch einen Pfeil P dargestellt. Der Fokusflecks 4a ist aus dem Fokusfleck 0ter-Ordnung 9₀, einem Fokusfleck -1ter-Ordnung 9₋₁ und +1ter-Ordnung 9₊₁ gebildet. Auf dem Objekt 4 befinden sich keine Bereiche mit unterschiedlichen Reflektivitäten. Es ist lediglich ein Bereich mit hoher Reflektivität 100 vorgesehen. Im allgemeinen ist das zu untersuchende Objekt 4 auf einem Probentisch angeordnet. Das Einstellen der optimalen Fokuslage erzielt man dadurch, dass zwischen dem Probentisch und dem Objektiv 14 des mikroskopbasierten Systems eine Relativbewegung erzeugt wird. Diese Relativbewegung wird um einen kleinen Bereich der optimalen Fokuslage ausgeführt. Aufgrund der Relativbewegung läuft der Fokusfleck 4a über die Oberfläche des Objekts 4 in der durch den Pfeil P bezeichneten Weise. In Fig. 2b ist die in der Zwischenbildebene 16 registrierte Intensität in Abhängigkeit von der Fokuslage aufgetragen. Auf der Abszisse 17, in Fig. 2b, ist die Pixelnummer der einzelnen photosensitiven Elemente des CCD-Elements aufgetragen. Auf der Ordinate 18 ist die Intensität des von der Oberfläche der Probe reflektieren Lichts in beliebigen Einheiten aufgetragen. Die Kurve, aus der sich die optimale Fokuslage ergibt, ist gestrichelt dargestellt. In jeder Kurve ist der Schwerpunkt der von der Oberfläche des Objekts reflektierten Intensität mit einem ausgefüllten Kreis dargestellt. Ist die Fokuseinstellung oberhalb oder unterhalb der optimalen Fokuslage, so ist deutlich zu erkennen, dass je näher man der optimalen Fokuslage ist die Breite des Intensitätspeaks abnimmt. Die Bewegungsrichtung des Schwerpunkts ist eindeutig und läuft in den hier geschilderten Fall von links nach rechts. Somit lässt sich die optimale Fokuslage eindeutig aus dem Verlauf des Schwerpunkts und der Form des Intensitätspeaks ermitteln.

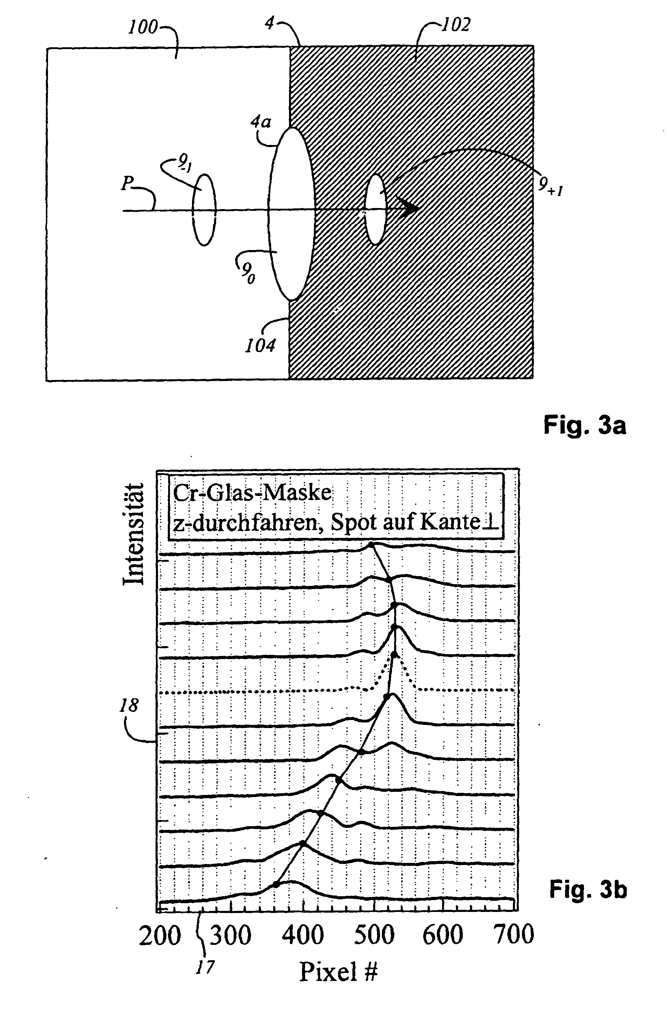

Fig. 3a zeigt die Form eines Fokusflecks 4a auf dem Objekt 4. Die Laufrichtung des Fokusflecks 4a ist auf dem Objekt 4 durch einen Pfeil P dargestellt. Der Fokusfleck 4a ist aus dem Fokusfleck 0ter-Ordnung 9₀, einem Fokusfleck -1ter-Ordnung 9₋₁ und +1ter-Ordnung 9₊₁ gebildet. Auf dem Objekt 4 ist ein Bereich mit hoher Reflektivität 100 und ein Bereich mit niedriger Reflektivität 102 vorgesehen. Die Bereiche sind durch eine Kante 104 getrennt, die in diesem Beispiel senkrecht zur Laufrichtung des Fokusflecks 4a verläuft. Wie bereits in der Beschreibung zu Fig. 2a erwähnt, erfolgt die Einstellung der optimalen Fokuslage durch eine Relativbewegung zwischen dem Probentisch und dem Objektiv des mikroskopbasierten Systems. Aufgrund der Relativbewegung läuft der Fokusfleck 4a über die Oberfläche des Objekts 4 in der durch den Pfeil P bezeichneten Weise. An der Kante 104 ändert sich die Reflektivität, wodurch sich die in die Zwischenbildebene 16 reflektierte Lichtmenge ändert. In Fig. 3b ist die in der Zwischenbildebene 16 registrierte Intensität in Abhängigkeit von der Fokuslage aufgetragen. Auf der Abszisse 17 in Fig. 3b ist die Pixelnummer der einzelnen photosensitiven Elemente des CCD-Elements aufgetragen. Auf der Ordinate 18 ist die Intensität des von der Oberfläche der Probe reflektieren Lichts in beliebigen Einheiten aufgetragen. Die Kurve, aus der sich die optimale Fokuslage ergibt, ist gestrichelt dargestellt. In jeder Kurve ist der Schwerpunkt der von der Oberfläche des Objekts reflektierten Intensität mit einem ausgefüllten Kreis dargestellt. Ist die Fokuseinstellung oberhalb oder unterhalb der optimalen Fokuslage, so ist deutlich zu erkennen, dass je näher man der optimalen Fokuslage ist die Symmetrie der Intensitätspeaks und dessen Höhe zunimmt. Die Bewegungsrichtung des Schwerpunkts läuft zunächst von links nach rechts, kehrt aber nach der optimalen Fokuslage um und läuft von rechts nach links. Aus der Vielzahl der ermittelten Kurvenformen lässt sich nicht eindeutig diejenige für den optimalen Fokus ermitteln. Es existieren paarweise Kurven mit gleicher Schwerpunktlage, die aber nicht mit der optimalen Fokuslage übereinstimmen. Die Bestimmung der Fokuslage bei einer Kante 104 senkrecht zur Laufrichtung des Fokusflecks ist somit nicht eindeutig.

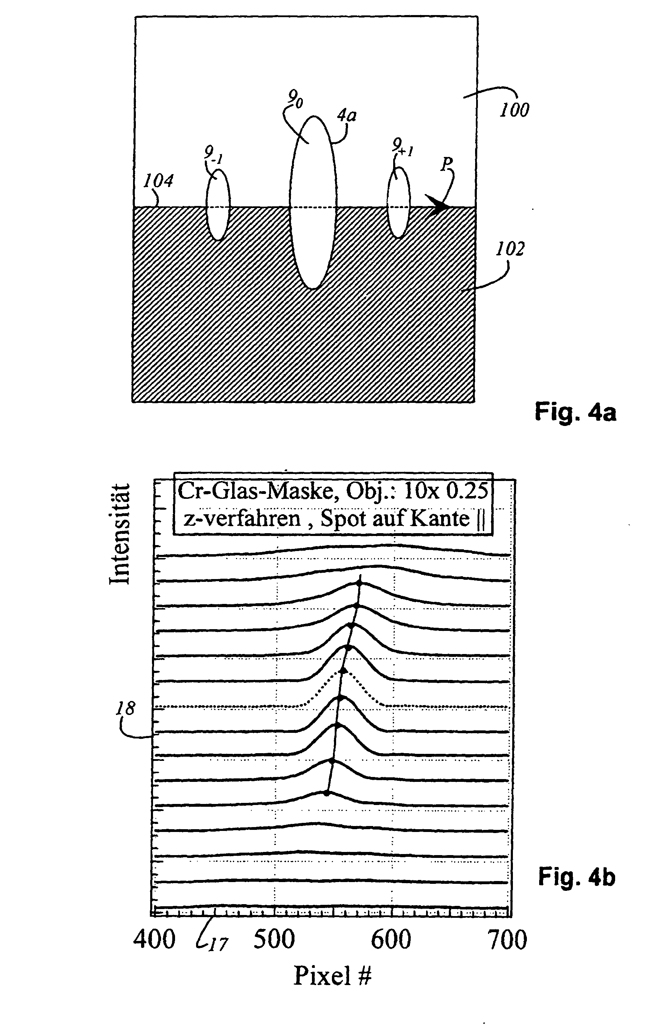

Fig. 4a zeigt den Fall, bei dem sich der Fokusfleck 4a parallel zu der Kante 106 bewegt, die durch das Aneinandergrenzen eines Bereichs 100 mit hoher Reflektivität und eines Bereichs 102 mit niedriger Reflektivität bestimmt ist. Die Laufrichtung des Fokusflecks 4a ist auf dem Objekt 4 ebenfalls durch den Pfeil P dargestellt. Beim Fokussieren läuft der Fokusfleck entlang der Kante 104, wodurch sich die in die Zwischenbildebene reflektierte Lichtmenge ändert. In Fig. 4b ist die in der Zwischenbildebene registrierte Intensität in Abhängigkeit von der Fokuslage dargestellt. Die graphische Darstellung der registrierten Intensität ist mit der Darstellung aus Fig. 2b zu vergleichen. Die Kurve mit der optimalen Fokuslage ist ebenfalls gestrichelt dargestellt. Es ist deutlich zu erkennen, dass der Unterschied zwischen der Kurveform für die optimale Fokuslage und den Kurven über und/oder unter der optimalen Fokuslage nicht so deutlich ist wie in Fig. 3b. Dennoch erlaubt die Bewegungsrichtung des Schwerpunkts, die eindeutig ist, und wie bereits in Fig. 2b erklärt, von links nach rechts läuft, eine eindeutige Aussage. Somit lässt sich, in Analogie zu der Situation in Fig. 2b, die optimale Fokuslage eindeutig aus dem Verlauf des Schwerpunkts und der Form des Intensitätspeaks ermitteln.

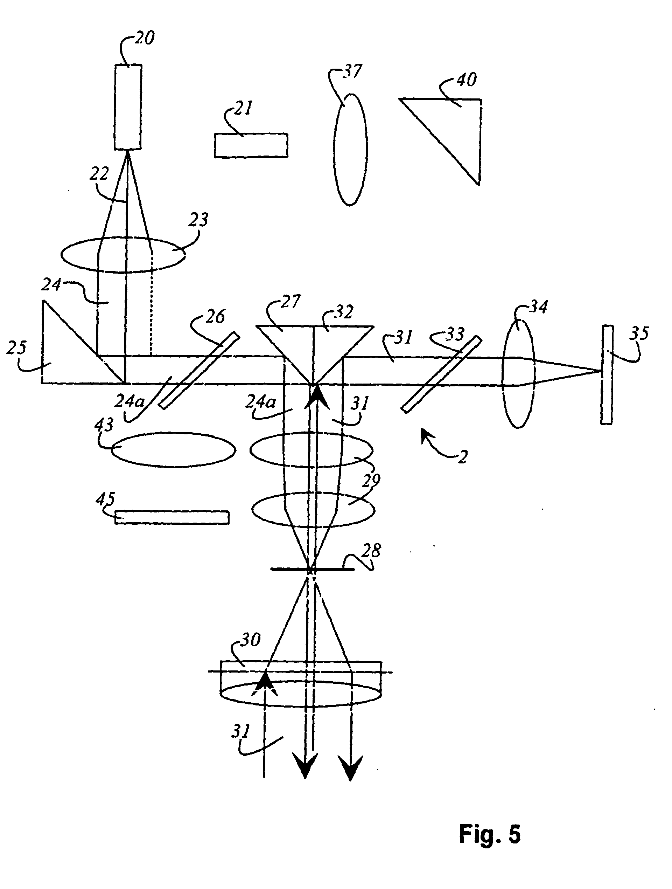

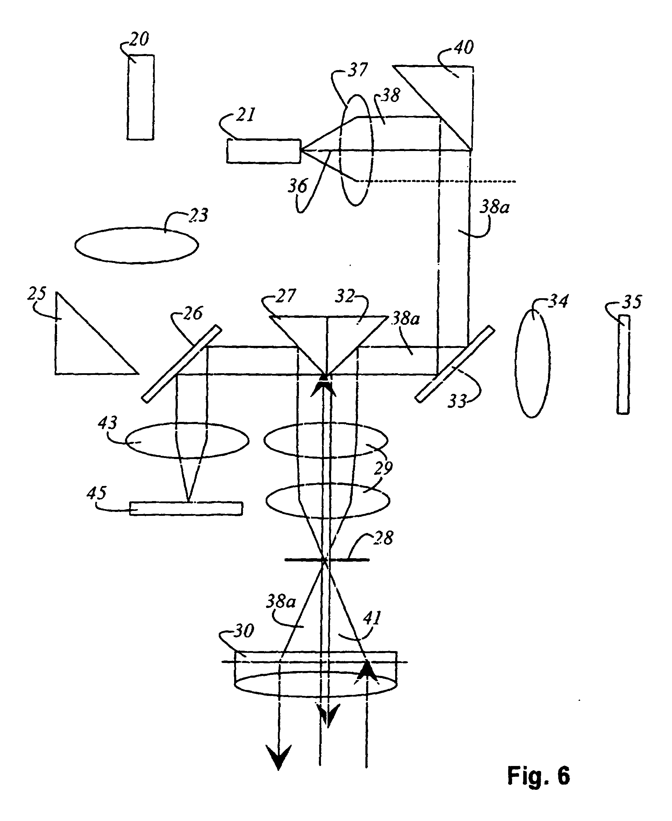

Das Autofokussystem gemäß der Erfindung ist in Fig. 5 und Fig. 6 schematisch dargestellt. Dabei ist das in Fig. 1a dargestellte Fokussystem dahingehend verbessert, dass die Bestimmung der Fokuslage zuverlässig und dabei unabhängig von der Lage der Kanten (Übergang von einem Bereich mit hoher Reflektivität zu einem Bereich mit niedriger Reflektivität) auf dem Objekt 4 möglich ist. Das Autofokussystem 2 besteht aus einer ersten und einer zweiten Lichtquelle 20 und 21, die beide z.B. als Laser ausgebildet sind. Die erste und die zweite Lichtquelle 20 und 21 werden während der Relativbewegung zwischen dem Probentisch und dem Objektiv abwechseln in kurzen Zeitabständen betrieben. Die erste und die zweite Lichtquelle 20 und 21 senden somit kurze Lichtblitze oder Lichtpulse auf die Oberfläche des Objekts 4. In Fig. 5 ist die Situation dargestellt, dass die erste Lichtquelle 20 den Lichtblitz als einen divergierenden Lichtstrahl 22 aussendet, der durch eine Optik 23 parallel gemacht wird. Der parallele Lichtstrahl 24 trifft derart auf ein optisches Umlenkmittel 25, so dass lediglich eine Hälfte des Lichtstrahls 24a umgelenkt wird und die andere Hälfte sich ungenutzt weiter ausbreitet. Die Hälfte des Lichtstrahls 24a breitet sich weiter parallel aus, tritt unbeeinflusst durch einen ersten Strahlteiler 26 und triff auf ein zweites Umlenkmittel 27. Von einer Abbildungsoptik 29 wird der Lichtstrahl 24a auf eine Zwischenbildebene 28 abgebildet und von dort wird der Lichtstrahl mit einer weiteren Optik 30 auf die Oberfläche des Objekts (nicht dargestellt) abgebildet. Zur Vermeidung von unerwünschtem Reflexlicht, kann in der Zwischenbildebene 28 zusätzlich eine Blende vorgesehen sein. Der vom Objekt reflektierte parallele Lichtstrahl 31 trifft nach Durchlaufen der weiteren Optik 30 und der Abbildungsoptik 29 auf ein drittes Umlenkmittel 32. Der vom drittem Umlenkmittel 32 abgelenkte reflektierte Lichtstrahl 31 tritt unbeeinflusst durch einen zweiten Strahlteiler 33 und wird von einer Optik 34 auf einen ersten lichtempfindlichen Detektor 35 abgebildet. Der erste lichtempfindliche Detektor 35 kann z.B. aus einem positionsempfindlichen Bauteil (PSD), aus einem CCD-Array oder einem Flächensensor mit einer definierten Anzahl von Sensorelementen bestehen. In einer bevorzugten Ausführungsform ist der erste lichtempfindliche Detektor 35 als PSD ausgebildet. In Fig. 6 ist die Situation dargestellt, bei der die zweite Lichtquelle 21 in Betrieb ist, also einen Lichtstrahl 36 als Lichtblitz aussendet. Wie bereits oben erwähnt, werden die erste und die zweite Lichtquelle 20 und 21 im Zeitmultiplex betrieben. Die zweite Lichtquelle 21 sendet den divergierenden Lichtstrahl 36 aus, der durch eine Optik 37 parallel gemacht wird. Der parallele Lichtstrahl 38 trifft derart auf ein viertes Umlenkmittel 40, so dass lediglich eine Hälfte des Lichtstrahls 38a umgelenkt wird und die andere Hälfte sich ungenutzt weiter ausbreitet. Vom viertem Umlenkmittel 40 trifft der parallele Lichtstrahl 38 auf den zweiten Strahlteiler 33 und wird von diesem auf das dritte Umlenkmittel 32 geleitet. Von der Abbildungsoptik 29 wird der Lichtstrahl 38a auf die Zwischenbildebene 28 abgebildet und von dort wird der Lichtstrahl 38a mit der weiteren Optik 30 auf die Oberfläche des Objekts (nicht dargestellt) abgebildet. Der vom Objekt reflektierte parallele Lichtstrahl 41 trifft nach Durchlaufen der Abbildungsoptik 30 und der weiteren Optik 29 auf das zweite Umlenkmittel 27. Der vom zweiten Umlenkmittel 27 abgelenkte und vom Objekt reflektierte Lichtstrahl 41 wird durch den ersten Strahlteiler 26 auf eine Optik 43 gerichtet und von dieser auf einen zweiten lichtempfindlichen Detektor 45 abgebildet. Dieser lichtempfindliche Detektor 45 ist ebenso ausgestattet wie der erste lichtempfindliche Detektor 35. Der zweite Detektor 45 ist ebenfalls als PSD ausgebildet.

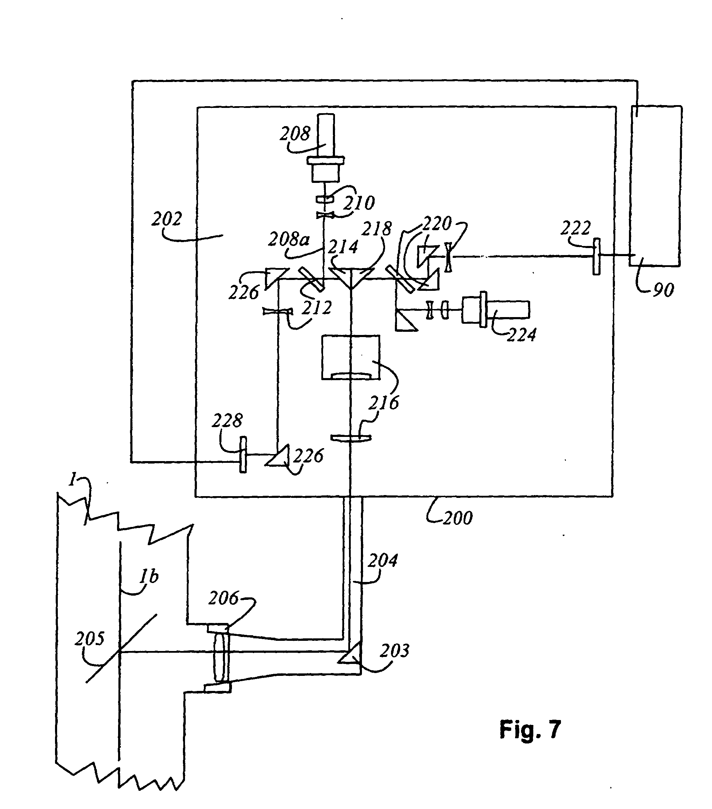

In Fig. 7 ist ein Autofokusmodul 200 mit dem erfinderischen Autofokussystem, wie in Fig. 5 und Fig. 6 dargestellt, das an ein mikroskopbasiertes System 1 angesetzt, das hier lediglich angedeutet ist. Das Autofokusmodul 200 umfasst ein Gehäuse 202 und einem mit dem Gehäuse 202 verbundenen Befestigungselement 204, das in einem Flansch 206 endet. Über den Flansch 206 kann das Autofokusmodul 200 an das mikroskopbasierte System 1 angesetzt werden. In dem hier dargestellten Ausführungsbeispiel ist im Befestigungselement 204 noch ein Umlenkmittel 203 vorgesehen, das das Messlicht zum Einkoppeln umlenkt. Ebenso ist eine Einkopplung ohne diese Umlenkung denkbar. Das mikroskopbasierte System 1 definiert einen Strahlengang 1a. Im Strahlengang 1a ist ein dichroitischer Strahlteiler 205 vorgesehen, der das Messlicht für die Einstellung des Fokus in den Strahlengang 1a des mikroskopbasierten Systems 1 einkoppelt, bzw. aus dem Strahlengang 1a des mikroskopbasierten Systems 1 auskoppelt. Im Gehäuse 202 des Autofokusmoduls 200 sind die optischen Elemente fest angeordnet und somit aufeinander justiert. Eine erste Laserdiode 208 erzeugt einen ersten Fokussierstrahl 208a, der über eine Optik 210, einen Strahlteiler 212, auf das erste Umlenkmittel 214 und über weitere Optiken 216 gelangt der Fokussierstrahl 208a zu einem Umlenkmittel, das den Fokussierstrahl 208a in das mikroskopbasierte System 1 einkoppelt. Die Einkopplung des Fokussierlichtstrahls 208a ist derart, dass er etwa exakt auf einer Hälfte des Beleuchtungslichtstrahls des mikroskopbasierten Systems 1 ist. Der von der Oberfläche des Objekts zurücklaufende Fokussierlichtstrahl 208a trifft auf ein zweites Umlenkmittel 218 und wird über mehrere optische Mittel 220 auf einen ersten Detektor 222 geleitet. Von einer zweiten Laserdiode 224 wird ein zweiter Fokussierlichtstrahl 224a erzeugt, der über die verschiedenen optischen Mittel 220 auf das zweite Umlenkmittel 218 gerichtet wird. In einer dem ersten Fokussierstrahl 208a entsprechenden Weise wird der Fokussierstrahl 224a in das mikroskopbasierte System 1 eingekoppelt. Der vom Objekt zurücklaufende zweite Fokussierstrahl 224a gelangt über weitere optische Mittel 226 auf einen zweiten Detektor 228.

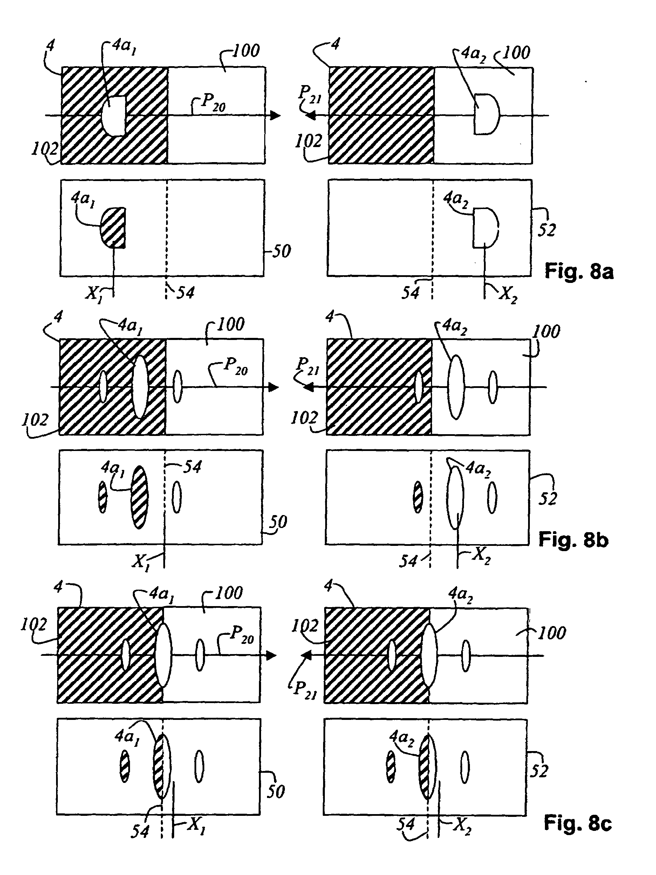

Die Fign. 8a bis 8c zeigen die Form und die Bewegung des Fokusflecks auf der Oberfläche des Objekts 4 und die Auswertung hierzu durch einen ersten und einen zweiten PSD 50 und 52. Mit der in Fig. 7 beschriebenen Vorrichtung wird die Abbildung eines ersten bzw. zweiten Fokusflecks 4a₁ bzw. 4a₂ auf der Oberfläche des Objekts 4 erzeugt. In Fig. 8a ist im oberen Teil die Laufrichtung des Fokusflecks 4a₁ bzw. 4a₂ dargestellt, wie sie entseht, wenn abwechselnd mit der ersten bzw. zweiten Lichtquelle 20 bzw. 21 beleuchtet wird. Bei der Beleuchtung durch die erste Lichtquelle 20 ist die Laufrichtung des Fokusflecks 4a₁ durch einen Pfeil P₂₀ dargestellt. Bei der Beleuchtung durch die zweite Lichtquelle 20 ist die Laufrichtung des Fokusflecks 4a₂ durch einen Pfeil P₂₁ dargestellt. Diese Bezeichnung wird auch in den Fig. 8b und 8c verwendet. Dabei ist in der in Fig. 8a dargestellten Situation die optimale Fokuslage noch weit entfernt und der Fokusfleck 4a₁ bzw. 4a₂ ist als Halbkreis auf der Oberfläche des Objekts 4 wiedergegeben. In entsprechender Weise wird der Fokusfleck 4a₁ bzw. 4a₂ auch auf den ersten bzw. zweiten PSD abgebildet 50 und 52. Auf dem ersten PSD 50 wird der erste Fokusfleck 4a₁ mit geringerer Intensität abgebildet, da er von der Reflexion von einem Bereich der Oberfläche des Objekts 4 mit geringer Reflektivität stammt. Der erste PSD 50 bestimmt die Lage X₁ des Schwerpunkts des ersten Fokusflecks 4a,. Der zweite PSD 52 bestimmt die Lage X₂ des Schwerpunkts des zweiten Fokusflecks 4a₂, der von einem Bereich des Objekts mit hoher Reflektivität erzeugt wird. Die Lage X₁ des Schwerpunkts und die Lage X₂ des Schwerpunkts sind gleichweit von der Mitte 54 des ersten bzw. zweiten PSD 50 bzw. 52 entfernt. Auf dem ersten PSD 50 befindet sich der erste Fokusfleck 4a₁ rechts von der Mitte 54. Auf dem zweiten PSD 52 befindet sich der erste Fokusfleck 4a₂ rechts von der Mitte 54. Da aber die vom PSD bestimmte Intensität nicht gleich ist, ist es eindeutig, dass der optimale Fokus noch nicht erreicht ist.

In Fig. 8b ist im oberen Teil die Laufrichtung des Fokusflecks 4a₁ bzw. 4a₂ dargestellt, wie er entsteht, wenn abwechselnd mit der ersten bzw. zweiten Lichtquelle 20 bzw. 21 beleuchtet wird. Dabei ist in der in Fig. 8b dargestellten Situation die optimale Fokuslage fast erreicht und der Fokusfleck 4a₁, bzw. 4a₂ ist wie in Fig. 2a aus dem Fokusfleck 0ter-Ordnung 9₀, einem Fokusfleck- 1ter-Ordnung 9₋₁ und +1ter-Ordnung 9₊₁ gebildet. In entsprechender Weise wird der Fokusfleck 4a₁ bzw. 4a₂ auch auf den ersten bzw. zweiten PSD abgebildet 50 und 52. Auf dem ersten PSD 50 wird der erste Fokusfleck 4a₁ mit geringerer Intensität abgebildet, da er größtenteils von der Reflexion von einem Bereich der Oberfläche des Objekts 4 mit geringer Reflektivität stammt, was durch die Schraffur des Fokusflecks 0ter-Ordnung 9₀ und des Fokusflecks -1ter-Ordnung 9₋₁ gekennzeichnet ist. Der erste PSD 50 bestimmt die Lage X₁ des Schwerpunkts des ersten Fokusflecks 4a₁. Der zweite PSD 52 bestimmt die Lage X₂ des Schwerpunkts des zweiten Fokusflecks 4a₂, der größtenteils von einem Bereich des Objekts mit hoher Reflektivität erzeugt wird. Die Lage X₁ des Schwerpunkts und die Lage X₂ des Schwerpunkts sind verschieden weit von der Mitte 54 des ersten bzw. zweiten PSD 50 bzw. 52 entfernt. Auf dem ersten PSD 50 befindet sich der Schwerpunkt des ersten Fokusflecks 4a₁ in der Mitte 54. Auf dem zweiten PSD 52 befindet sich der Schwerpunkt des zweiten Fokusflecks 4a₂ rechts von der Mitte 54. Da die Lage des Schwerpunkts auf dem ersten bzw. zweiten PSD 50 bzw. 52 nicht gleich ist, ist der optimale Fokus noch nicht erreicht.

In Fig. 8c ist im oberen Teil die Laufrichtung des Fokusflecks 4a₁ bzw. 4a₂ dargestellt, wie er entseht, wenn abwechselnd mit der ersten bzw. zweiten Lichtquelle 20 bzw. 21 beleuchtet wird. Dabei ist in der in Fig. 8c dargestellten Situation die optimale Fokuslage erreicht und der Fokusfleck 4a₁ bzw. 4a₂ ist wie in Fig. 2a aus dem Fokusfleck 0ter-Ordnung 9₀, einem Fokusfleck -1ter-Ordnung 9₋₁ und +1ter-Ordnung 9₊₁ gebildet. In entsprechender Weise wird der Fokusfleck 4a₁ bzw. 4a₂ auch auf den ersten bzw. zweiten PSD abgebildet 50 und 52. Auf dem ersten PSD 50 wird der erste Fokusfleck 4a₁ derart abgebildet, das die Hälfte des Fokusflecks 4a₁ von der Reflexion von einem Bereich der Oberfläche des Objekts 4 mit geringer Reflektivität stammt und die andere Hälfte des Fokusflecks 4a₁ von einem Bereich der Oberfläche des Objekts 4 mit hoher Reflektivität stammt. Der Bereich des Fokusflecks auf dem PSD, der von geringer Reflektivität herrührt ist durch eine Schraffur gekennzeichnet. Der erste PSD 50 bestimmt die Lage X₁ des Schwerpunkts des ersten Fokusflecks 4a₁. Der zweite PSD 52 bestimmt die Lage X₂ des Schwerpunkts des zweiten Fokusflecks 4a₂. Die Lage X₁ des Schwerpunkts und die Lage X₂ des Schwerpunkts sind gleich weit von der Mitte 54 des ersten bzw. zweiten PSD 50 bzw. 52 entfernt. Dabei ist Lage X₁ des Schwerpunkts und die Lage X₂ des Schwerpunkts jeweils um den gleichen Betrag nach rechts von in der Mitte 54 verschoben. Die Lage des Schwerpunkts auf dem ersten bzw. zweiten PSD 50 bzw. 52 ist dem Betrage nach gleich, so dass bei diesem Messergebnis des ersten und der zweiten PSD 50 und 52 der optimale Fokus erreicht ist.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Autofokusmodul (200) für ein mikroskopbasiertes System (2) mit einem Objektiv (14), das eine optische Achse (13) definiert, in der sich ein Beleuchtungslichtstrahl (15) ausbreitet, der auf einer Oberfläche eines Objekts (4), auf das fokussiert werden soll, senkrecht steht,
• wobei im Autofokusmodul (200) mindestens eine erste und eine zweite Lichtquellen (20, 21) vorgesehen ist, von denen jede einen Lichtstrahl (22, 36) zum Fokussieren erzeugt,
• und ein optisches Mittel (27, 32) vorgesehen ist, dass derart ausgebildet und angeordnet ist, dass das Licht der ersten Lichtquelle (20) in eine erste Hälfte des Beleuchtungslichtstrahls und das Licht der zweiten Lichtquelle (21) in eine zweite Hälfte des Beleuchtungslichtstrahls gerichtet ist,
• ein erster und ein zweiter Detektor (35, 45) vorgesehen ist, wobei die Detektoren so angeordnet sind, dass die von der Oberfläche des Objekts (4) reflektierten ersten und zweiten Lichtstrahlen (31, 41) von der ersten bzw. zweiten Lichtquelle (20, 21) über das optische Mittel (27, 32) auf den ersten und den zweiten Detektor gerichtet (35, 45) sind, wobei
• jeweils zwischen erster und zweiter Lichtquelle (20, 21) und dem optischen Mittel (27, 23) ein erstes bzw. zweites optisches Umlenkmittel (25, 40) vorgesehen ist, das jeweils einen Bruchteil eines jeden Lichtstrahls (24a, 38a) auf das optische Mittel (27, 23) richtet, das diesen Bruchteil des jeweiligen Lichtstrahls in den Beleuchtungslichtstrahl (15) des mikroskopbasierten Systems (2) einkoppelt und auf das Objekt (4) richtet.

2. Autofokusmodul nach Anspruch 1, **dadurch gekennzeichnet, dass** das optische Mittel (27, 32) aus jeweils zwei verspiegelten Elementen aufgebaut ist die zueinander unter einem rechten Winkel angeordnet sind und die zu dem jeweils auftreffenden Lichtstrahl zum Fokussieren unter einem Winkel von 45° geneigt sind.

3. Autofokusmodul nach Anspruch 1, **dadurch gekennzeichnet, dass** die erste und die zweite Lichtquelle (208, 224), der erste und der zweite Detektor (222, 228), das optische Mittel (214, 218) und weitere Strahllenkmittel (210, 220, 216 226) in einem Gehäuse (202) angeordnet sind, das mit dem mikroskopbasierten System (1) verbindbar ist.

4. Autofokusmodul nach einem der Ansprüche 1 bis 3, **dadurch gekennzeichnet, dass** als Lichtquellen (20, 21, 208, 224) Laserdioden vorgesehen sind, die den Lichtstrahl zum Fokussieren erzeugen.

5. Autofokusmodul nach Anspruch 1, **dadurch gekennzeichnet, dass** der erste und der zweite Detektor (35, 34) als eine Matrix aus photosensitiven Elementen ausgestaltet ist

6. Autofokusmodul nach Anspruch 1, **dadurch gekennzeichnet, dass** der erste und der zweite Detektor (35, 34) aus einem ersten PSD (50) und einem zweiten PSD (52) besteht.

7. Mikroskopsystem mit einem Objektiv (14), das eine optische Achse (13) definiert, die auf der Oberfläche eines Objekts (4) senkrecht steht und einem Tisch, auf dem das Objekt (4) aufliegt und der in Richtung der optischen Achse (13) verfahrbar ist, und mit dem ein Autofokusmodul (200) gemäß einem der Ansprüche 1 bis 6 verbunden ist.

8. Mikroskopsystem nach Anspruch 7, **dadurch gekennzeichnet, dass** in einem Befestigungselement für das Autofokusmodul (200) im Mikroskopsystem ein dichroitischer Strahlteiler (205) angebracht ist, der den jeweiligen Lichtstrahl zum Fokussieren in das Mikroskopsystem (1) einkoppelt und den von der Oberfläche des Objekts (4) reflektierten Lichtstrahl in das Autofokusmodul (200) zurückkoppelt.

9. Autofokusverfahren für ein mikroskopbasiertes System (1), das mindestens ein Objektiv (14) umfasst, das eine optische Achse (13) des mikroskopbasierten Systems (1) festlegt, **gekennzeichnet durch** die folgenden Schritte:
• Verfahren eines Objekts (5) in Richtung der optischen Achse (13) und um einen Bereich der die optimale Fokuslage beinhaltet,
• Erzeugen je eines Lichtstrahts(22, 36) zum Fokussieren **durch** eine erste und eine zweite Lichtquelle (20, 21) wobei die erste und die zweite Lichtquelle (20, 21) abwechselnd voneinander betrieben werden,
• Vorsehen eines optischen Mittels (27, 32), dass derart ausgebildet und angeordnet ist, dass das Licht der ersten Lichtquelle (20) in eine erste Hälfte des Beleuchtungslichtstrahls und das Licht der zweiten Lichtquelle (21) in eine zweite Hälfte des Beleuchtungslichtstrahls gerichtet ist,
• Vorsehen eines ersten und eines zweiten Detektors (35, 45), wobei die Detektoren so angeordnet sind, dass die von der Oberfläche des Objekts (4) reflektierten ersten und zweiten Lichtstrahlen (31, 41) von der ersten bzw. zweiten Lichtquelle (20, 21) über ein optisches Mittel (27, 32) auf den ersten und den zweiten Detektor gerichtet (35, 45) sind,
• Vorsehen von einem ersten und einem zweiten optischen Umlenkmittel (25,40), das aus dem ersten und dem zweiten Lichtstrahl jeweils einen Bruchteil (24a, 38a) erzeugt,
• Richten eines Bruchteils (24a, 38a) des ersten und des zweiten Lichtstrahls (22, 36) mit dem ersten bzw. dem zweiten optischen Umlenkmittel (25, 40) auf das optische Mittel (27, 32), und Richten des Bruchteils (24a, 38a) des ersten und des zweiten Lichtstrahls (22, 36) mittels des optischen Mittels (27, 32) auf die Oberfläche des Objekts(4),
• Empfangen des von der Oberfläche des Objekts (4) reflektierten Lichts (31, 41) des ersten Lichtstrahls auf dem ersten Detektor (35) und empfangen des von der Oberfläche des Objekts (4) reflektierten Lichts des zweiten Lichtstrahls auf dem zweiten Detektor (45), und
• Bestimmen der optimalen Fokuslage (4a) aus dem gemessenen Intensitäten auf dem ersten und zweiten Detektor (35, 45).

10. Autofokusverfahren nach Anspruch 9, **dadurch gekennzeichnet, dass** während des Verfahrens des Objekts (4) abwechselnd Intensitäten an dem ersten und an dem zweiten Detektor (35, 45) ermittelt werden und dass die ermittelten Intensitäten als Intensitätsprofile in einem Speicher eines Steuerrechners (90) abgelegt werden.

11. Autofokusverfahren nach Anspruch 10, **dadurch gekennzeichnet, dass** aus den gemessenen Intensitäten bzw. Intensitätsprofile diejenigen ermittelt werden, die den Kriterien für eine optimale Fokuslage am nächsten kommen.

12. Autofokusverfahren nach Anspruch 9, **dadurch gekennzeichnet, dass** das optische Mittel (27, 32) als ein Prisma ausgebildet ist, und dass das Prisma derart angeordnet ist.

13. Autofokusverfahren nach Anspruch 9, **dadurch gekennzeichnet, dass** die erste und die zweite Lichtquelle (208, 224), der erste und der zweite Detektor(222, 228), das optische Mittel (214, 218) und weitere Strahllenkmittel (210, 212, 220,226) in einem Gehäuse (202) angeordnet sind, das mit dem mikroskopbasierten System (1) verbunden wird.

## Claims

1. Autofocus module (200) for a microscope-based system (2), having an objective (14) which defines an optical axis (13) along which there propagates an illuminating light beam (15) which is perpendicular to the surface of an object (4) which is to be focused upon,
• in which at least one first and one second light source (20, 21) of which each produces a light beam (22, 36) for focussing are provided in the autofocus module (200),
• and an optical means (27, 32) is provided which is designed and arranged in such a way that the light in the first light source (20) is directed into a first half of the illuminating light beam, and the light from the second light source (21) is directed into a second half of the illuminating light beam, and
• in which a first and a second detector (35, 45) are provided, the detectors being arranged such that the first and second light beams (31, 41), reflected from the surface of the object (4), from the first and second light sources (20, 21) respectively, are directed (35, 45) via the optical means (27, 32) onto the first detector and the second detector,
• there being provided in each case between the first and second light sources (20, 21) and the optical means (27, 23) a first and second optical reflecting means (25, 40), which in each case direct a fraction of each light beam (24a, 38a) onto the optical means (27, 23) which couple this fraction of the respective light beam into the illuminating light beam (15) of the microscope-based system (2) and direct it onto the object (4).

2. Autofocus module according to Claim 1, **characterized in that** the optical means (27, 32) is constructed from in each case two silvered elements which are arranged at a right angle to one another and which are inclined at an angle of 45° to the respectively impinging light beam for the purpose of focussing.

3. Autofocus module according to Claim 1, **characterized in that** the first and the second light source (208, 224), the first and the second detector (222, 228), the optical means (214, 218) and further beam directing means (210, 220, 216, 226) are arranged in a housing (202) which can be connected to the microscope-based system (1).

4. Autofocus module according to one of Claims 1 to 3, **characterized in that** laser diodes which produce the light beam for focussing are provided as light sources (20, 21, 208, 224).

5. Autofocus module according to Claim 1, **characterized in that** the first and second detectors (35, 34) are designed as a matrix of photosensitive elements.

6. Autofocus module according to Claim 1, **characterized in that** the first and second detectors (35, 34) consists of a first PSD (50) and a second PSD (52).

7. Microscope system having an objective (14) which defines an optical axis (13) which is at right angles to the surface of an object (4), and having a stage on which the object (4) rests and which can be moved in the direction of the optical axis (13) and to which an autofocus module (200) in accordance with Claims 1 to 6 is connected.

8. Microscope system according to Claim 7, **characterized in that** fitted in a fastening element for the autofocus module (200) in the microscope system is a dichroic beam splitter (205) which couples the respective light beam for focussing into the microscope system (1) and couples the light beam reflected from the surface of the object (4) into the autofocus module (200).

9. Autofocus method for a microscope-based system (1) which has at least one objective (14) which defines an optical axis (13) of the microscope-based system (1), **characterized by** the following steps:
• moving an object (5) in the direction of the optical axis (13) and over a range containing the optimum focal position,
• producing one light beam (22, 36) each for focussing by means of a first and second light source (20, 21), the first and second light sources (20, 21) being operated alternately from one another,
• providing an optical means (27, 32) which is designed and arranged in such a way that the light from the first light source (20) is directed into a first half of the illuminating light beam, and the light from the second light source (21) is directed into a second half of the illuminating light beam,
• providing a first and second detector (35, 45), the detectors being arranged such that the first and second light beams (31, 41), reflected from the surface of the object (4), from the first and second light sources (20, 21), respectively are directed (35, 45) onto the first and second detectors via an optical means (27, 32),
• providing a first and a second optical deflecting means (25, 40) which in each case produces a fraction (24a, 38a) of the first and second light beams,
• directing a fraction (24a, 38a) of the first and second light beams (22, 36) onto the optical means (27, 32) with the aid of the first and second optical reflecting means (25, 40) and directing the fraction (24a, 38a) of the first and second light beams (22, 36) onto the surface of the object (4) with the aid of the optical means (27, 32),
• receiving the light (31, 41), reflected from the surface of the object (4), of the first light beam on the first detector (35), and receiving the light, reflected from the surface of the object (4), of the second light beam on the second detector (45), and
• determining the optimum focal position (4a) from the measured intensities on the first and second detectors (35, 45).

10. Autofocus method according to Claim 9, **characterized in that** during the movement of the object (4) intensities at the first and second detectors (35, 45) are determined alternately and **in that** the determined intensities are stored as intensity profiles in a memory of a control computer (90).

11. Autofocus method according to Claim 10, **characterized in that** of the measured intensities or intensity profiles it is those that come closest to the criteria for an optimum focal length which are determined.

12. Autofocus method according to Claim 9, **characterized in that** the optical means (27, 32) is designed as a prism, and **in that** the prism is arranged in such a way that.

13. Autofocus method according to Claim 9, **characterized in that** the first and second light sources (208, 224), the first and second detectors (222, 228), the optical means (214, 218) and further beam directing means (210, 212, 220, 226) are arranged in a housing (202) which is connected to the microscope-based system (1).

## Revendications

1. Module de mise au point automatique (200) pour un système à base de microscope (2) comprenant un objectif (14) qui définit un axe optique (13) dans lequel se propage un rayon de lumière d'éclairage (15) qui est perpendiculaire à une surface d'un objet (4) sur lequel il faut effectuer la mise au point,
* au moins une première et une deuxième source de lumière (20, 21) étant prévues dans le module de mise au point automatique (200), dont chacune produit un rayon de lumière (22, 36) pour la mise au point,
* et un moyen optique (27, 32) étant prévu, lequel est configuré et arrangé de telle sorte que la lumière de la première source de lumière (20) soit dirigée dans une première moitié du rayon de lumière d'éclairage et la lumière de la deuxième source de lumière (21) dans une deuxième moitié du rayon de lumière d'éclairage,
* un premier et un deuxième détecteur (35, 45) étant prévus, les détecteurs étant arrangés de telle sorte que les premier et deuxième rayons de lumière (31, 41) en provenance de la première ou de la deuxième source de lumière (20, 21) et réfléchis par la surface de l'objet (4) soient dirigés par le biais du moyen optique (27, 32) sur le premier et le deuxième détecteur (35, 45),
* un premier ou un deuxième moyen de déviation optique (25, 40) étant à chaque fois prévu entre la première et la deuxième source de lumière (20, 21) et le moyen optique (27, 32), lequel dirige à chaque fois une fraction de chacun des rayons de lumière (24a, 38a) sur le moyen optique (27, 32) qui injecte cette fraction de rayon de lumière correspondant dans le rayon de lumière d'éclairage (15) du système à base de microscope (2) et le dirige sur l'objet (4).

2. Module de mise au point automatique selon la revendication 1, **caractérisé en ce que** le moyen optique (27, 32) est à chaque fois constitué de deux éléments en miroir qui sont disposés selon un angle droit l'un par rapport à l'autre et qui sont inclinés selon un angle de 45° par rapport au rayon de lumière incident respectif destiné à la mise au point.

3. Module de mise au point automatique selon la revendication 1, **caractérisé en ce que** la première et la deuxième source de lumière (208, 224), le premier et le deuxième détecteur (222, 228), le moyen optique (214, 218) et d'autres moyens de direction des rayons (210, 220, 216, 226) sont disposés dans un boîtier (202) qui peut être relié au système à base de microscope (1).

4. Module de mise au point automatique selon l'une des revendications 1 à 3, **caractérisé en ce que** les sources de lumière (20, 21, 208, 224) prévues sont des diodes laser qui produisent le rayon de lumière destiné à la mise au point.

5. Module de mise au point automatique selon la revendication 1, **caractérisé en ce que** le premier et le deuxième détecteur (35, 34) sont réalisés sous la forme d'une matrice d'éléments photosensibles.

6. Module de mise au point automatique selon la revendication 1, **caractérisé en ce que** le premier et le deuxième détecteur (35, 34) se composent d'un premier PSD (50) et d'un deuxième PSD (52).

7. Système de microscope comprenant un objectif (14) qui définit un axe optique (13) qui est perpendiculaire à la surface d'un objet (4) et une table sur laquelle repose l'objet (4) et qui peut être déplacée dans la direction de l'axe optique (13), et auquel est relié un module de mise au point automatique (200) selon l'une des revendications 1 à 6.

8. Système de microscope selon la revendication 7, **caractérisé en ce que** dans un élément de fixation pour le module de mise au point automatique (200) dans le système à microscope est fixé un diviseur de rayon dichroïque (205) qui injecte le rayon de lumière correspondant destiné à la mise au point dans le système de microscope (1) et réinjecte dans le module de mise au point automatique (200) le rayon de lumière réfléchi par la surface de l'objet (4).

9. Procédé de mise au point automatique pour un système à base de microscope (1), comprenant au moins un objectif (14) qui définit un axe optique (13) du système à base de microscope (1), **caractérisé par** les étapes suivantes :
* déplacer un objet (5) en direction de l'axe optique (13) et autour d'une zone qui contient la position de mise au point optimale,
* produire à chaque fois un rayon de lumière (22, 36) destiné à la mise au point par une première et une deuxième source de lumière (20, 21), la première et la deuxième source de lumière (20, 21) fonctionnant en alternance l'une par rapport à l'autre,
* prévoir un moyen optique (27, 32) qui est configuré et arrangé de telle sorte que la lumière de la première source de lumière (20) soit dirigée dans une première moitié du rayon de lumière d'éclairage et la lumière de la deuxième source de lumière (21) dans une deuxième moitié du rayon de lumière d'éclairage,
* prévoir un premier et un deuxième détecteur (35, 45), les détecteurs étant arrangés de telle sorte que les premier et deuxième rayons de lumière (31, 41) en provenance de la première ou de la deuxième source de lumière (20, 21) et réfléchis par la surface de l'objet (4) soient dirigés par le biais d'un moyen optique (27, 32) sur le premier et le deuxième détecteur (35, 45),
* prévoir un premier et un deuxième moyen de déviation optique (25, 40) qui produisent respectivement une fraction (24a, 38a) du premier et du deuxième rayon de lumière,
* orienter une fraction (24a, 38a) du premier et du deuxième rayon de lumière (22, 36) avec les premier et deuxième moyens de déviation optique (25, 40) sur le moyen optique (27, 32) et orienter la fraction (24a, 38a) du premier et du deuxième rayon de lumière (22, 36) sur la surface de l'objet (4) au moyen du moyen optique (27, 32),
* recevoir la lumière (31, 41) du premier rayon de lumière réfléchie par la surface de l'objet (4) sur le premier détecteur (35) et recevoir la lumière du deuxième rayon de lumière réfléchie par la surface de l'objet (4) sur le deuxième détecteur (45), et
* déterminer la position de mise au point optimale (4a) à partir des intensités mesurées sur le premier et le deuxième détecteur (35, 45).

10. Procédé de mise au point automatique selon la revendication 9, **caractérisé en ce que** pendant le déplacement de l'objet (4), les intensités au niveau du premier et du deuxième détecteur (35, 45) sont déterminées en alternance et **en ce que** les intensités déterminées sont enregistrées sous la forme de profils d'intensité dans une mémoire d'un ordinateur de commande (90).

11. Procédé de mise au point automatique selon la revendication 10, **caractérisé en ce que** l'on détermine, à partir des intensités ou des profils d'intensité mesurés, ceux qui se rapprochent le plus des critères d'une position de mise au point optimale.

12. Procédé de mise au point automatique selon la revendication 9, **caractérisé en ce que** le moyen optique (27, 32) est réalisé sous la forme d'un prisme et le prisme est disposé de telle sorte.

13. Procédé de mise au point automatique selon la revendication 9, **caractérisé en ce que** la première et la deuxième source de lumière (208, 224), le premier et le deuxième détecteur (222, 228), le moyen optique (214, 218) et d'autres moyens de direction des rayons (210, 212, 220, 226) sont disposés dans un boîtier (202) qui est relié au système à base de microscope (1).
